# EUROPEAN PATENT APPLICATION

(11) **EP 1 408 621 A1**
(43) Date of publication of application: **14.04.2004**
(21) Application number: 02741340.0
(22) Date of filing: 26.06.2002
(51) Int. Cl.: H04B 1/707

(54) **CDMA RECEPTION APPARATUS AND CDMA RECEPTION METHOD**

(30) Priority: 13.07.2001 JP 2001213548; 10.08.2001 JP 2001244377
(71) Applicant: Kawasaki Microelectronics, Inc., Chiba-shi, Chiba 261-8501 (JP)
(72) Inventor: SATOH, Takaharu, Kawasaki Microelectronics, Inc., Mihama-ku, Chiba-shi, Chiba 261-8501 (JP)
(74) Representative: Stebbing, Timothy Charles
(86) International application number: PCT/JP2002/006417
(87) International publication number: WO 2003/009489

(57) **Abstract**

In a CDMA receiver and a CDMA receiving method according to the present invention, based on a channel estimation result from a despread pilot symbol, a despread data symbol and a data symbol delayed by one symbol time, which have been delayed by an amount of time equivalent to the channel estimation, are derotated and simultaneously demodulated. Further, in the CDMA receiver and the CDMA receiving method according to the present invention, a vector conversion is performed on the despread pilot symbol, vector converted pilot symbols are accumulatively added, and the channel estimation is performed based on a result of an accumulative addition of the pilot symbols corresponding to the number of the pilot symbols to be used in the channel estimation.

## Description

### TECHNICAL FIELD

The present invention relates to a CDMA (code division multiple access) receiver and a COMA receiving method using a spectrum spreading technique.

### BACKGROUND ART

In a communications system using a spectrum spreading technique, modulated and spread data is sent from a transmission side, and the data received on a reception side is despread and is demodulated, to thereby perform transmission/reception of the data. For example, from a base station as a transmission side, modulated with a QPSK (quadrature phase shift keying) system and spread data is transmitted. Further, a CDMA receiver as a reception side has one or more fingers for demodulating receive data, and the fingers sequentially despread the receive data, and derotate it and demodulate it.

Here, according to a standard protocol of third generation mobile communications systems (3GPP), a diversity communications technique is used, in which the base station uses at most two antennas to transmit down link signals. Using an open loop mode STTD (space time transmit diversity), for example, in every one symbol time, one data is transmitted from each of two antennas of the base station to the CDMA receiver. In other words, the sum of two data are transmitted to the CDMA receiver in every one symbol time.

Further, one of the data transmitted from the two antennas is transmitted just as it is, for example, and with the other data, data sequence corresponding to two symbol time is chronologically changed, positive and negative conditions are inverted, complex conjugate processing is performed, and the data is sent in this state. Therefore, in the CDMA receiver, at the time when two data corresponding to one symbol time are received from two antennas, the data is not demodulated. The demodulation of the data is performed when the sum of four data corresponding to related two symbol times are received.

Therefore, in a case of an STTD-adaptive CDMA receiver, if the receive data is not encoded with STTD, the finger sequentially demodulates one data sent from one antenna in every one symbol time. Further, if the receive data is encoded with STTD, related four receive data sent from two antennas, are demodulated in every two symbol time to obtain the two receive data corresponding thereto after demodulation.

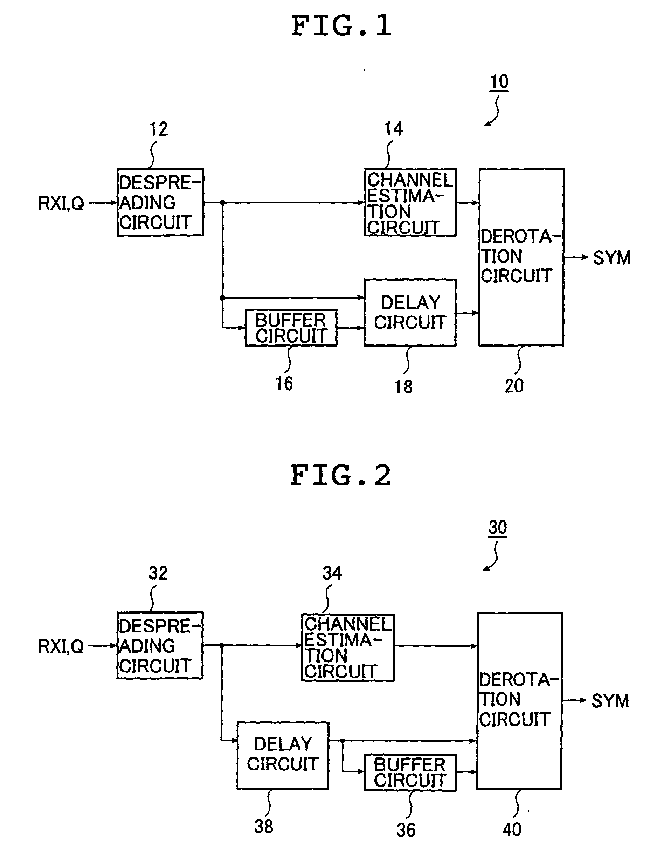

Hereinafter, a CDMA receiver including the above-mentioned STTD-adaptive finger will be explained, with reference to Fig. 2.

Here, the receive data is composed of a data symbol that is user information, and a pilot symbol that is a previously known data for performing channel estimation.

A finger 30 shown in Fig. 2 is provided with a despreading circuit 32, a channel estimation circuit 34, a delay circuit (a memory) 38, a buffer circuit 36 and a derotation circuit 40. The despreading circuit 32 despreads the receive data. The channel estimation circuit 34 performs the channel estimation based on the despread pilot symbol. The delay circuit 38 delays the despread data symbol by an amount of time corresponding to the channel estimation. The buffer circuit 36 delays, for one symbol time, the data symbol after it was delayed by the amount of time corresponding to the channel estimation. The derotation circuit 40 derotates and demodulates the data symbol according to a channel estimation result.

In a case where receive data RXI and RXQ are not encoded with the STTD, they are sent one by one from one antenna in each one symbol time, and the receive data RXI and RXQ corresponding to one channel received at the CDMA receiver are sequentially despread by the despread circuit 32. Then, the despread pilot symbol is delivered to the channel estimation circuit 34, and the despread data symbol is delivered to the delay circuit 38.

At the channel estimation circuit 34, for example, in each one symbol time, the channel estimation is performed sequentially based on the despread pilot symbol corresponding to one symbol time, and a result of a channel estimation for one symbol time is delivered to the derotation circuit 40.

On the other hand, the despread data symbol corresponding to one symbol time is sequentially held in the memory of the delay circuit 38 in each one symbol time. Then, in each one symbol time, the data symbol held in the memory of the delay circuit 38 is read out, according to the timing that the channel estimation result is outputted from the channel estimation circuit 34, and this data symbol is provided to the derotation circuit 40. In other words, the data symbol is delayed by the amount of time corresponding to the channel estimation.

After that, in each one symbol time, based on the channel estimation result corresponding to one symbol time delivered from the channel estimation circuit 34, the derotation circuit 40 derotates and sequentially demodulates the data symbol corresponding to one symbol time which was provided from the delay circuit 38 simultaneously with the provision of the channel estimation result and which was delayed by the amount of time corresponding to the channel estimation corresponding to one symbol time, and demodulated receive data SYM is outputted.

Note that, in a case where the receive data is not encoded with STTD, the derotation circuit 40 does not use the data symbol provided from the buffer circuit 36.

On the other hand, in a case where the receive data RXI and RXQ are encoded with STTD, they are sent one by one from, for example, two antennas in each one symbol time respectively, and the receive data RXI and RXQ corresponding to two channels received at the CDMA receiver are sequentially despread by the despreading circuit 32.

At the channel estimation circuit 34, for example, in every two symbol time, a channel estimation is performed sequentially based on the respective despread pilot symbols corresponding to two channels, and a result of the channel estimation corresponding to two channels is delivered to the derotation circuit 40.

On the other hand, the despread data symbols corresponding to two channels are sequentially held in a memory of the delay circuit 38 in each one symbol time. Then, the data symbol corresponding to two channels held in the memory of the delay circuit 38 is read out in each one symbol time, according to the timing that the channel estimation result is outputted from the channel estimation circuit 34, and this data symbol is provided to the buffer circuit 36 and the derotation circuit 40.

Further, the data symbols corresponding to two channels provided from the delay circuit 38 to the buffer circuit 36 are further delayed by one symbol time by the buffer circuit 36, and after that they are provided to the derotation circuit 40.

After that, in the derotation circuit 40, in every two symbol time, based on the channel estimation result provided from the channel estimation circuit 34, the data symbols corresponding to two channels provided from the delay circuit 38 simultaneously with the channel estimation result, and the data symbols corresponding to two channels provided from the buffer circuit 36, are simultaneously derotated and demodulated, and two receive data SYM after demodulation are outputted.

In this way, in the conventional CDMA receiver 30, regardless of whether or not the receive data RXI and RXQ are encoded with STTD, the data symbol is always held in the memory of the delay circuit 38 in each one symbol time, and is read out in each one symbol time. Therefore, since the memory of the delay circuit 38 is accessed many times, much power is consumed, and there was a problem that a drive time of the battery in a portable terminal or the like was shortened.

Next, an operation in the conventional CDMA receiver, in a case where the channel estimation is performed so as to detect a phase difference (a rotation angle) between the transmit data (the data transmitted from the transmission side) and the receive data (the data received at the reception side), will be explained.

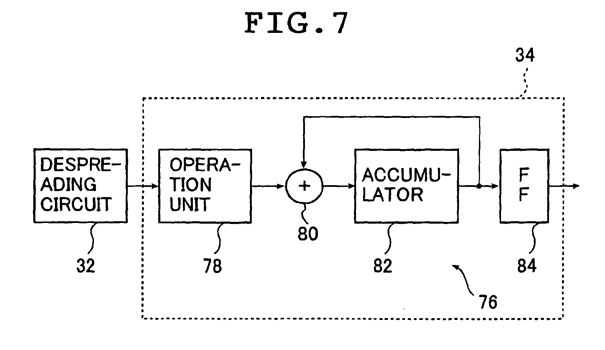

Fig. 7 is a conceptual view of the configuration of the despreading circuit 32 and the channel estimation circuit 34 constituting the finger shown in Fig. 2.

The channel estimation circuit 34 shown in Fig. 2 is provided with an operation unit 78, an accumulative addition circuit 76 and a flip flop (FF) 84. Further, the accumulative addition circuit 76 is provided with an accumulator 82 and an adder 80. The operation unit 78 performs the channel estimation based on the despread receive data. The accumulative addition circuit 76 adds a plurality of channel estimation values accumulatively. The flip flop 84 holds a final channel estimation value after the accumulative addition.

Here, the transmit data is transmitted according to a unit of a frame that includes a plurality of slots. Further, each slot includes a plurality of data symbols which are user information, and one or more pilot symbols for performing the channel estimation. The pilot symbol is data regarding which it is already known at the reception side what kind of data will be transmitted from the transmission side, and at the reception side, the channel estimation circuit 34 uses the pilot symbol to perform the channel estimation.

In accordance with the conventional channel estimation circuit 34, each time receive data is despread by the despreading circuit 32, the channel estimation is performed by the operation unit 78, and the channel estimation values are added sequentially and accumulatively by the accumulative addition circuit 76. Note that, in the accumulative addition circuit 76, the channel estimation value after the channel estimation, and the accumulative added data held in the accumulator 82, are added together by the adder 80, and the addition result is held again in the accumulator 82.

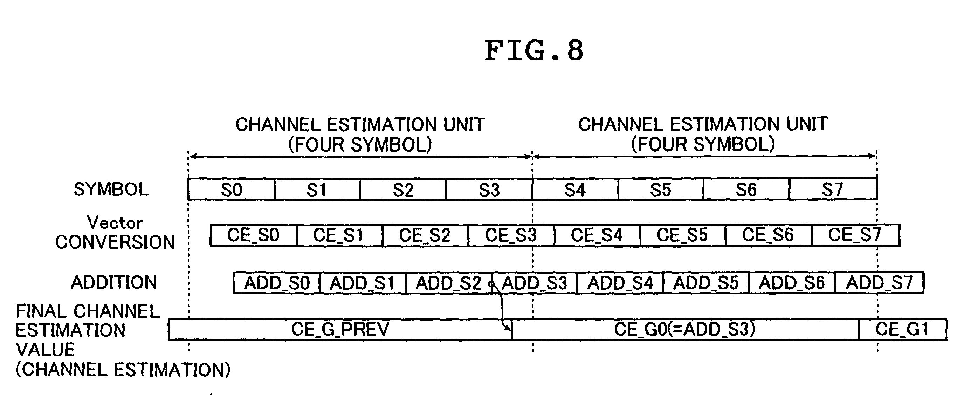

For example, in a case where four pilot symbols are used in one channel estimation, as shown in a timing chart in Fig. 8, for example each time pilot symbols S0 through S3 are despread in numerical order by the despreading circuit 32, channel estimation values CE_S0 through CE_S3 are sequentially calculated by the operation unit 78. These channel estimation values CE_S0 through CE_S3 are added sequentially and accumulatively by the accumulative addition circuit 76, and the addition results ADD_S0 through ADD_S3 are calculated.

Note that, in the accumulative addition circuit 76, the addition results ADD_S0 and ADD_S4 will be an addition result of the channel estimation values CE_S0 and CE_S4 respectively, and data "0" (an initial value) held in the accumulator 82.

Then, ultimately, an accumulatively added value CE_G0 (=ADD_S3) of the channel estimation values CE_S0 through CE_S3 of four pilot symbols S0 through S3, is held in the flip flop 84.

Further, the channel estimation circuit 34 operates similarly with respect to the subsequent four pilot symbols S4 through S7, and thereafter, the same operation is repeatedly performed with four pilot symbols as a unit.

In this way, in the conventional channel estimation circuit 34, the channel estimation is performed as many times as the number of pilot symbols to be used in the channel estimation. As in the above-mentioned example, in the case where four pilot symbols are used in one channel estimation, the channel estimation is performed four times and the addition is performed three times. Therefore, as the number of the pilot symbols used in the channel estimation and the number of fingers increase, their power consumption increases, and exhaustion of the battery in a cellular phone etc. occurs quickly, so that a problem arises in that it could not withstand use for a long time.

Further, in a mobile communications system using CDMA or other such spectrum spreading techniques, a RAKE receiving method for synthesizing multipath receive data to improve communication quality is adopted. A CDMA receiver employing the RAKE receiving method is provided with a plurality of fingers equal to a number of corresponding paths. The receive data is despread, its phase difference between the receive data and the transmit data is compensated and the receive data is demodulated by each of the fingers. The receive data of all the paths after demodulation are synthesized.

In this way, in the CDMA receiver employing the RAKE receiving method, the above-mentioned problem of power consumption increasing in the conventional STTD-adaptive type and the channel estimation, becomes more conspicuous.

### DISCLOSURE OF THE INVENTION

An object of the present invention is to provide a CDMA receiver having the same scale and functions as a conventional one, while also enabling reduction of consumed power.

In order to achieve the object, the present invention provides a CDMA receiver including at least one finger for demodulating receive data including data symbols and pilot symbols, wherein the finger includes: a despreading circuit for despreading the receive data; a channel estimation circuit for performing a channel estimation based on a despread pilot symbol; a buffer circuit for delaying a despread data symbol for one symbol time; a delay circuit for delaying the despread data symbol and the data symbol after being delayed by one symbol time, by an amount of time equivalent to the channel estimation; and a derotation circuit for derotating and demodulating the data symbol delayed by the amount of time equivalent to the channel estimation, based on a result of the channel estimation.

Here, the channel estimation circuit preferably includes: a vector conversion circuit for performing a vector conversion of the despread pilot symbol such that all the pilot symbols are apparently transmitted from the same point; an accumulative addition circuit for accumulatively adding vector converted pilot symbols; and an operation unit for performing the channel estimation based on a result of an accumulative addition of the pilot symbols corresponding to the number of the pilot symbols to be used in the channel estimation.

Further, the receive data preferably is encoded using STTD, which is one of standard open loop modes of third generation mobile communications systems.

Accordingly, power consumed by the STTD-adaptive CDMA receiver can be reduced.

Further, the present invention provides a CDMA receiver including at least one finger for demodulating receive data including data symbols and pilot symbols, wherein the finger includes a despreading circuit for despreading the receive data and a channel estimation circuit, the estimation circuit includes a vector conversion circuit for performing a vector conversion of a despread pilot symbol such that all the pilot symbols are apparently transmitted from the same point; an accumulative addition circuit for accumulatively adding vector converted pilot symbols; and an operation unit for performing channel estimation based on a result of an accumulative addition of the pilot symbols corresponding to the number of the pilot symbols to be used for the channel estimation.

Here, it is desirable that a QPSK method is used as a modulation method for the pilot symbol, and the vector conversion circuit performs the vector conversion of the despread pilot symbol such that all the pilot symbols are apparently transmitted from the same point in an I-Q plane.

Further, the CDMA receiver preferably uses a RAKE receiving method having the above-mentioned plural fingers.

Accordingly, power consumption in the channel estimation of the CDMA receiver can be reduced.

Further the present invention provides a CDMA receiving method for demodulating receive data including data symbols and pilot symbols, wherein a channel estimation is performed on a despread pilot symbol, a despread data symbol and the despread data symbol delayed by one symbol time are delayed by an amount of time equivalent to the channel estimation, and based on a result of the channel estimation, the data symbol delayed by the time equivalent to the channel estimation is derotated and demodulated.

Further, the present invention provides a CDMA receiving method for demodulating receive data including data symbols and pilot symbols, wherein a vector conversion is performed of the despread pilot symbols such that all the pilot symbols are apparently transmitted from the same point, the vector converted pilot symbols are accumulatively added, and a channel estimation is performed based on a result of an accumulative addition of the pilot symbols corresponding to the number of the pilot symbols to be used in the channel estimation.

### BRIEF DESCRIPTION OF THE DRAWINGS

Fig. 1 is a structural conceptual view of an embodiment of a finger provided in a CDMA receiver according to the present invention.
Fig. 2 is a structural conceptual view of an example of a finger provided in a conventional CDMA receiver.
Fig. 3 is a structural conceptual view of an embodiment of a finger having a channel estimation circuit used in the CDMA receiver according to the present invention.
Fig. 4 is a conceptual view of an embodiment showing a vector conversion performed in the CDMA receiver according to the present invention.
Fig. 5 is a conceptual view of an embodiment showing an I-Q plane.
Fig. 6 is a timing chart of an embodiment showing an operation of the CDMA receiver according to the present invention.
Fig. 7 is a structural conceptual view of an example of a finger having a channel estimation circuit used in the conventional CDMA receiver.
Fig. 8 is a timing chart of an example showing an operation of the conventional CDMA receiver.

### BEST MODE FOR CARRYING OUT THE INVENTION

Hereinafter, a CDMA receiver and a CDMA receiving method of the present invention are explained in detail, based on a preferred embodiment shown in the accompanying drawings.

Fig. 1 is a structural conceptual view of an embodiment of a finger of the CDMA receiver according to the present invention. A finger 10 shown in Fig. 1 has a despreading circuit 12, a channel estimation circuit 14, a buffer circuit 16, a delay circuit 18, and a derotation circuit 20. Regardless of whether or not data is encoded using STTD, the finger 10 delays data symbols corresponding to two symbol times for an amount of time equivalent to a channel estimation corresponding to two symbol times, and simultaneously derotates and demodulates them.

In the finger 10 shown in Fig. 1, first, the despreading circuit 12 sequentially despreads receive data RXI and RXQ in each one symbol time. A pilot symbol contained in the despread receive data is provided to the channel estimation circuit 14, and the data symbol is provided to the buffer circuit 16 and to the delay circuit 18.

Here, in the despreading circuit 12, in a case where the receive data RXI and RXQ are not encoded using STTD, the data are transmitted one by one in each one symbol time from one antenna, and the receive data RXI and RXQ received by the CDMA receiver corresponding to one channel are despread. Further, in a case where the receive data are encoded using STTD, the data are transmitted one by one in each one symbol time from two antennas for example, and the receive data RXI and RXQ received by the CDMA receiver corresponding to two channels are simultaneously despread.

Subsequently, the channel estimation circuit 14 sequentially performs the channel estimation in every two symbol time, based on each of the despread pilot symbols corresponding to two symbol times, and detects a phase difference (a rotation angle) between the pilot symbol transmitted from a transmission side and the pilot symbol received at the reception side. Accordingly, a result of the channel estimation is provided to the derotation circuit 20.

Here, in the case where the receive data RXI and RXQ are not encoded using STTD, the channel estimation circuit 14 performs the channel estimation based on each of the symbol data corresponding to two symbol times of one channel, and the channel estimation results corresponding to two symbol times are outputted. Further, in the case where the receive data are encoded using STTD, the channel estimation is performed based on each of the symbol data corresponding to two symbol times of two channels, and the channel estimation results corresponding to two channels are outputted.

In each one symbol time, the buffer circuit 16 delays for one symbol time the despread data symbol provided from the despreading circuit 12. Accordingly, the data symbol delayed by one symbol time is provided to the delay circuit 18.

Here, at the buffer circuit 16, in the case where the receive data RXI and RXQ are not encoded using STTD, the data symbol corresponding to one symbol time of one channel is delayed by one symbol time. Further, in the case where the receive data are encoded using STTD, the data symbols corresponding to one symbol time of two channels are delayed by one symbol time.

Further, the delay circuit 18 is a memory for delaying the data symbol despread by the despreading circuit 12, and the data symbol delayed by one symbol time by the buffer circuit 16, by an amount of time equivalent to the channel estimation by the channel estimation circuit 14 in every two symbol time. An output signal from the delay circuit 18, namely the despread data symbol delayed by the amount of time equivalent to the channel estimation, and the data symbol delayed by one symbol time, are provided to the derotation circuit 20.

Here, in the memory of the delay circuit 18, regardless of whether or not the receive data RXI and RXQ are encoded using STTD, the data symbol corresponding to continuous two symbol time, namely the data symbol despread by the despreading circuit 12, and the data symbol delayed by one symbol time by the buffer circuit 16, are simultaneously held, and after being delayed by the amount of time equivalent to the channel estimation corresponding to two symbol time, the data corresponding to two symbol time are simultaneously read out.

Therefore, according to the construction of the memory in the delay circuit 18, its bit width is twice the width of a memory of a delay circuit 38 of a conventional CDMA receiver 30 shown in Fig. 2 and the number of words is half the number of words thereof.

Finally, at the derotation circuit 20, in every two symbol time, based on the result of the channel estimation corresponding to two symbol time provided from the channel estimation circuit 14, the despread data symbol delayed by the amount of time equivalent to the channel estimation corresponding to two symbol time and the data symbol delayed by one symbol time, which have been provided from the delay circuit 18, are simultaneously derotated, their phase differences are compensated and they are demodulated, and receive data SYM corresponding to two symbol time after demodulation is outputted.

At the derotation circuit 20, in the case where the receive data RXI and RXQ are not encoded using STTD, the data symbol data corresponding to two symbol time of one channel are simultaneously derotated. Further, in the case where the receive data are encoded using STTD, the data symbols corresponding to two symbol time of two channels are simultaneously derotated. In other words, at the derotation circuit 20, regardless of whether or not the receive data are encoded using STTD, the processing is performed in every two symbol time.

Note that, it goes without saying that the CDMA receiver according to the present invention includes various types of components in addition to the finger 10 shown in the diagram. Further, for each component of the finger 10, any conventional publicly known constructions can be used.

Next, explanation is made regarding an operation of the finger 10.

In the finger 10, first, in the case where the receive data RXI and RXQ are not encoded using STTD, the receive data are transmitted one by one from one antenna at a time in every one symbol time, and the receive data RXI and RXQ corresponding to one channel received by the CDMA receiver are sequentially despread by the despreading circuit 12. Then, the pilot symbol in the despread receive data is provided to the channel estimation circuit 14, and the data symbol in it is provided to the buffer circuit 16 and to the delay circuit 18.

At the channel estimation circuit 14, in every two symbol time, the channel estimation is performed based on each of the despread pilot symbols corresponding to two symbol time, and the results of the channel estimation corresponding to two symbol time are simultaneously provided to the derotation circuit 20.

On the other hand, the despread data symbol supplied to the buffer circuit 16 is delayed by one symbol time by the buffer circuit 16, and then is supplied to the delay circuit 18. Therefore, the data symbol corresponding to consecutive two symbol time, namely the despread data symbol outputted from the despreading circuit 12, and the data symbol delayed by one symbol time and outputted from the buffer circuit 16, are simultaneously supplied to the delay circuit 18.

The above-mentioned data symbols corresponding to consecutive two symbol time are sequentially held in the memory of the delay circuit 18, once in every two symbol time. Then, the data symbols corresponding to two symbol time held in the memory of the delay circuit 18 are simultaneously read out once in every two symbol time, according to the timing at which the channel estimation result is outputted from the channel estimation circuit14, and are provided to the derotation circuit 20. In other words, the data symbols are delayed by the amount of time equivalent to the channel estimation corresponding to two symbol times.

After that, in every two symbol time, based on the channel estimation result corresponding to two symbol time provided from the channel estimation circuit 14, the data symbols corresponding to two symbol time of one channel delayed by the amount of time equivalent to the channel estimation corresponding to two symbol time and provided from the delay circuit 18 simultaneously with the channel estimation result are simultaneously derotated by the derotation circuit 20 and are sequentially demodulated, and receive data SYM corresponding to two symbol time after demodulation is outputted.

On the other hand, in the finger 10, in the case where the receive data RXI and RXQ are encoded using STTD, for example, the data are transmitted one by one from two antennas in each one symbol time respectively, and the receive data RXI and RXQ corresponding to two channels received by the CDMA receiver are simultaneously and sequentially despread by the despreading circuit 12.

At the channel estimation circuit 14, in every two symbol time, the channel estimation is performed sequentially based on each of the despread pilot symbols corresponding to two symbol time of two channels, and the results of the channel estimation corresponding to two channels are simultaneously provided to the derotation circuit 20.

On the other hand, the despread data symbol corresponding to two channels supplied to the buffer circuit 16 is delayed by one symbol time by the buffer circuit 16, and then is supplied to the delay circuit 18. Therefore, the data symbol corresponding to consecutive two symbol time, namely the despread data symbol corresponding to two channels outputted from the despreading circuit 12, and the data symbol corresponding to two channels delayed by one symbol time and outputted from the buffer circuit 16, are simultaneously supplied to the delay circuit 18.

The above-mentioned data symbols corresponding to consecutive two symbol time are sequentially held in the memory of the delay circuit 18, once in every two symbol time. Then, the data symbols corresponding to two symbol time held in the memory of the delay circuit 18 are simultaneously read out once in two symbol time, according to the timing at which the channel estimation result corresponding to two channels is outputted from the channel estimation circuit14, and are provided to the derotation circuit 20. In other words, the data symbols are delayed by the amount of time equivalent to the channel estimation corresponding to two channels.

After that, in every two symbol time, based on the channel estimation result corresponding to two channels provided from the channel estimation circuit 14, four data symbols corresponding to two symbol time of two channels delayed by the amount of time equivalent to the channel estimation corresponding to two channels and provided from the delay circuit 18 simultaneously with the channel estimation result are simultaneously derotated by the derotation circuit 20 and are sequentially demodulated, and two receive data SYM corresponding to two symbol time after demodulation are outputted.

As described above, in accordance with the CDMA receiver of the present invention, in the finger 10, by operating the delay circuit 18 once in every two symbol time, the circuit can have the same scale and equivalent function as the finger 30 in the conventional CDMA receiver shown in Fig. 2, while also reducing the power consumed by the delay circuit 18 by half.

Note that, in accordance with above described embodiment, explanation was made regarding the case where the channel estimation is performed in every two symbol time. However, the present invention is not limited to this. The channel estimation method can use any conventional, publicly known channel estimation method, and the time required for the channel estimation is not restricted to one symbol time or two symbol time, but can be modified as needed. Further, depending on the channel estimation method, circuit constructions of the buffer 16 and the delay circuit 18 may be modified as needed.

Further, in the CDMA receiver employing the RAKE receiving method described above, a plurality of the fingers 10 in the embodiment are provided to further reduce the consumed power.

Next, explanation is made regarding the channel estimation in the CDMA receiver according to the present invention.

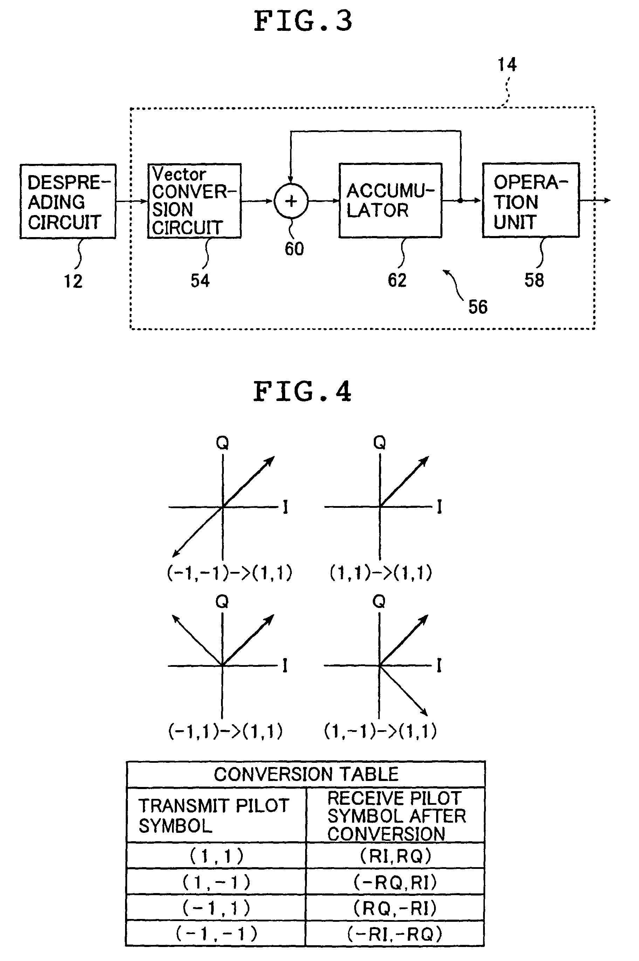

Fig. 3 is a structural conceptual view of an embodiment of the finger having the channel estimation circuit 14, used in the CDMA receiver according to the present invention. A portion surrounded by a dotted line shown in Fig. 3 corresponds to the channel estimation circuit shown in Fig. 1.

The channel estimation circuit 14 shown in the diagram is provided with a vector conversion circuit 54, an accumulative addition circuit 56 and an operation unit 58. The channel estimation circuit 14 performs the vector conversion on the despread receive data, accumulatively adds a plurality of the vector converted receive data used in one channel estimation, and uses the receive data after accumulative addition to perform the channel estimation.

The receive data sequentially despread by the despreading circuit 12, namely, the despread pilot symbol in the case of this embodiment, is supplied to the vector conversion circuit 54.

Subsequently, the vector conversion circuit 54 sequentially performs the vector conversion on the despread pilot symbols as if all the pilot symbols were transmitted from the same point. The vector converted pilot symbols are supplied to the accumulative addition circuit 56. Note that, detailed explanation of the vector conversion is provided later.

The accumulative addition circuit 56 is for sequentially accumulatively adding the vector converted pilot symbols, and it is provided with an adder 60 and an accumulator 62. In the accumulative addition circuit 56, the adder 60 adds the vector converted pilot symbols and accumulative added data held in the accumulator 62, and the addition result is held again in the accumulator 62. The final accumulatively added pilot symbol is supplied to the operation unit 58.

Finally, the operation unit 58 performs the channel estimation based on the final accumulatively added pilot symbol, namely the result of accumulative addition of the pilot symbols corresponding to the number used for the channel estimation, and detects the phase difference (the rotation angle) between the pilot symbol transmitted from the transmission side and the pilot symbol received on the reception side. In the finger, based on this phase difference, the data symbol is derotated, and its phase difference is compensated and the data symbol is demodulated.

Note that, in the despreading circuit 12, the accumulative addition circuit 56 and the operation unit 58, any conventional publicly known construction can be used. Further, regarding the channel estimation circuit 14 in the example shown in the diagram, in order to facilitate comparison with the conventional channel estimation circuit 34 shown in Fig. 7, only the construction around the channel estimation circuit in the finger is shown. Therefore, it goes without saying that the channel estimation circuit 14 includes various types of components other than the components shown in the diagram.

Next, explanation is made regarding the vector conversion.

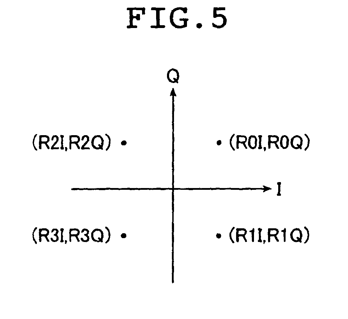

For example, in a case where a communications system using a QPSK (quadrature phase shift keying) system is used, as shown in Fig. 4, a pilot symbol indicating any one of points (1, 1), (1, -1), (-1, 1) and (-1, -1) in an I-Q plane, is sent from the transmission side such as a base station, to the reception side such as a portable terminal.

By contrast, the vector conversion circuit 54 performs the vector conversion such that all the pilot symbols are apparently sent from the same point in the I-Q plane.

For example, consider a case where the vector conversion circuit 54 is configured so as to perform the vector conversion of the pilot symbol to indicate the point (1, 1) in the I-Q plane. As shown in Fig. 4, in a case where the transmit pilot symbol (the pilot symbol transmitted from the transmission side) indicates the point (1, 1), the vector conversion circuit 54 performs the vector conversion of the receive pilot symbol (RI, RQ) (the pilot symbol received at the reception side) to convert it to (RI, RQ). In other words, in this case the vector conversion is not performed.

Similarly, as shown in a conversion table in Fig. 4, the vector conversion circuit 54 performs the vector conversion such that in a case where the transmit pilot symbol indicates the point (1, -1), the receive pilot symbol (RI, RQ) is converted to (-RQ, RI), in a case where the transmit pilot symbol indicates the point (-1, 1), the receive pilot symbol (RI, RQ) is converted to (RQ, -RI), and in a case where the transmit pilot symbol indicates the point (-1, -1), the receive pilot symbol (RI, RQ) is converted to (-RI, -RQ), respectively.

In other words, as described above, in the case where the vector conversion circuit 54 is configured to perform vector conversion of the pilot symbol so as to indicate the point (1, 1) in the I-Q plane, the vector converted pilot symbol can be processed in the same way as in a case where the pilot symbol transmitted from the transmission side indicating the point (1, 1) is received at the reception side. Therefore, it goes without saying that there is no problem that the vector conversion decreases a precision level of the channel estimation.

Here, as shown in Fig. 5, if, for example, four receive pilot symbols (1, 1), (1, -1), (-1, 1) and (-1, -1) are (R0I, R0Q), (R1I, R1Q), (R2I, R2Q) and (R3I, R3Q) respectively, accumulated data I = R01 - R1Q + R2Q - R3I, and accumulated data Q = R0Q + R1I - R2I - R3Q. The channel estimation circuit 14 uses the accumulated data I and Q to perform the channel estimation assuming that all the pilot symbols are data indicating (1, 1).

Hereinafter, in order to facilitate comparison with the channel estimation circuit 34 shown in Fig. 7, a case where four pilot symbols are used in one channel estimation is given as an example, and an operation of the channel estimation circuit 14 is explained.

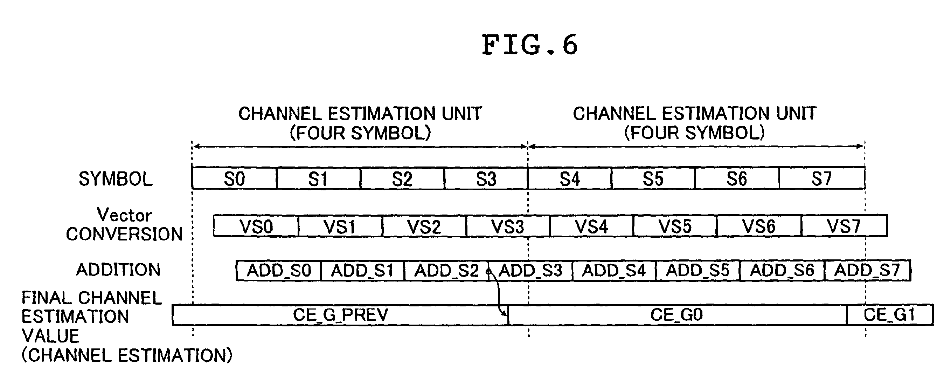

As shown in a timing chart in Fig. 6, in the case where four pilot symbols are used in one channel estimation, for example, every time the despreading circuit 12 despreads pilot symbols S0 through S3 in these order, the vector conversion circuit 54 sequentially calculates vector conversion values VS0 through VS3, and the accumulative addition circuit 56 sequentially accumulatively adds these vector conversion values VS0 through VS3, and the addition results ADD_S0 through ADD_S3 are calculated.

Note that, in the accumulative addition circuit 56, the addition results ADD_S0 and ADD_S4 are the results from adding the vector conversion values VS0 and VS4 with the data "0" (initial value) held in the accumulator 62, respectively.

Then, the operation unit 58 performs the channel estimation based on the final accumulatively added pilot symbol (=ADD_S3), to calculate its channel estimation value CE_G0.

Further, the channel estimation circuit 14 operates similarly with respect to the subsequent four pilot symbols S4 through S7. Thereafter, similar operation is repeated using four pilot symbols as a unit.

In the channel estimation circuit 14 used in the CDMA receiver according to the present invention, as shown in the above example, in the case where four pilot symbols are used in one channel estimation, the addition is performed three times similarly to the case of the channel estimation circuit 34 shown in Fig. 7, but the channel estimation only needs to be performed once. Additionally, the vector conversion is performed four times, but the vector conversion is a simple processing, and the consumed power is significantly less than the power consumed by the addition and the channel estimation. Therefore, while maintaining the precision of the channel estimation, the power consumed by the channel estimation can be reduced.

Note that, the modulation method is not limited to the QPSK method, but any conventional, publicly known modulation methods can be used. Further, in the above embodiment, four pilot symbols are used in one channel estimation. However, the present invention is not restricted to this, but it is possible to use as many pilot symbols as desired in each channel estimation.

Further, in the CDMA receiver using the RAKE receiving method, a plurality of fingers having the channel estimation circuit of this embodiment may be provided, whereby further reduction of the consumed power can be achieved. Further, by providing the finger 10 of this embodiment shown in Fig. 1 with the finger combined with the channel estimation circuit shown in Fig. 3, even greater reduction of the consumed power is possible.

The CDMA receiver and the CDMA receiving method according to the present invention are basically as described above.

As described above, detailed explanation was given regarding the CDMA receiver and the CDMA receiving method according to the present invention. However, the present invention is not restricted to the above embodiments. Of course, various improvements and modifications may be made without departing from the gist of the present invention.

### INDUSTRIAL APPLICABILITY

As described in detail above, in a CDMA receiver and a CDMA receiving method according to the present invention, a finger is used to perform a channel estimation based on a despread pilot symbol, and simultaneously delay a despread data symbol and a data symbol delayed by one symbol time by an amount of time equivalent to the channel estimation. The despread data symbol and the data symbol delayed by one symbol time, which have been delayed by the amount of time equivalent to the channel estimation, are derotated and simultaneously demodulated based on a channel estimation result.

Further, in the CDMA receiver and the CDMA receiving method according to the present invention, the received pilot symbol is despread, a vector conversion is performed on the despread pilot symbol, and the vector converted pilot symbols are accumulatively added, after that, the channel estimation is performed based on a result of an accumulative addition of the pilot symbols corresponding to the number of the pilot symbols to be used in the channel estimation.

According to the CDMA receiver and the CDMA receiving method of the present invention, regardless of whether or not STTD is used, consumed power can be reduced and channel estimation precision can be maintained, while reducing the consumed power used in the channel estimation. Therefore, drive time of a battery-operated portable terminal can be extended longer than in a conventional technique.

## Claims

1. A CDMA receiver comprising at least one finger for demodulating receive data including data symbols and pilot symbols, the finger comprises:
a despreading circuit for despreading the receive data;
a channel estimation circuit for performing a channel estimation based on a despread pilot symbol;
a buffer circuit for delaying a despread data symbol for one symbol time;
a delay circuit for delaying the despread data symbol and the data symbol after being delayed by the one symbol time, by an amount of time equivalent to the channel estimation; and
a derotation circuit for derotating and demodulating the data symbol delayed by the amount of time equivalent to the channel estimation, based on a result of the channel estimation.

2. A CDMA receiver according to claim 1,
the channel estimation circuit comprises:
a vector conversion circuit for performing a vector conversion of the despread pilot symbol such that all the pilot symbols are apparently transmitted from the same point;
an accumulative addition circuit for accumulatively adding vector converted pilot symbols; and
an operation unit for performing the channel estimation based on a result of an accumulative addition of the pilot symbols corresponding to the number of the pilot symbols to be used in the channel estimation.

3. A CDMA receiver according to claim 1 or 2, wherein the receive data is encoded using STTD, which is one of standard open loop modes of third generation mobile communications systems.

4. A CDMA receiver comprising at least one finger for demodulating receive data including data symbols and pilot symbols, the finger comprises:
a vector conversion circuit for performing a vector conversion of a despread pilot symbol such that all the pilot symbols are apparently transmitted from the same point;
an accumulative addition circuit for accumulatively adding vector converted pilot symbols; and
an operation unit for performing channel estimation based on a result of an accumulative addition of the pilot symbols corresponding to the number of the pilot symbols to be used for the channel estimation.

5. A CDMA receiver according to claim 2 or 4, **characterized in that**:
a QPSK method is used as a modulation method for the pilot symbol; and
the vector conversion circuit performs the vector conversion of the despread pilot symbol such that all the pilot symbols are apparently transmitted from the same point in an I-Q plane.

6. A CDMA receiver according to any one of claims 1 to 5, wherein the CDMA receiver uses a RAKE receiving method having the plurality of fingers.

7. A CDMA receiving method for demodulating receive data including data symbols and pilot symbols, comprising the steps of:
performing a channel estimation based on despread pilot symbols;
delaying a despread data symbol and the despread data symbol delayed by one symbol time by an amount of time equivalent to the channel estimation; and
derotating and demodulating the data symbol delayed by the time equivalent to the channel estimation based on a result of the channel estimation.

8. A CDMA receiving method for demodulating receive data including data symbols and pilot symbols, comprising the steps of:
performing a vector conversion of the despread pilot symbols such that all the pilot symbols are apparently transmitted from the same point;
accumulatively adding vector converted pilot symbols; and
performing a channel estimation based on a result of an accumulative addition of the pilot symbols corresponding to the number of the pilot symbols to be used in the channel estimation.
